# NEUE EUROPÄISCHE PATENTSCHRIFT

(11) **EP 0 672 743 B2**
(45) Veröffentlichungstag und Bekanntmachung des Hinweises auf die Entscheidung über den Einspruch: **16.05.2001**
(45) Hinweis auf die Patenterteilung: 14.10.1998
(21) Anmeldenummer: 95103237.4
(22) Anmeldetag: 07.03.1995
(51) Int. Cl.: C10B 53/00, C10B 7/00, B01J 3/00, B01J 19/18

(54) **Verfahren und Vorrichtung zum thermischen Behandeln von Materialien mit Anteilen an verdampfbaren Stoffen**
Process and apparatus for the thermal treatment of materials containing vaporizable substances
Procédé et dispositif pour le traitement thermique de matériaux contenant des matières vaporisables

(30) Priorität: 18.03.1994 DE 4409401; 18.03.1994 DE 4409402
(43) Veröffentlichungstag der Anmeldung: 20.09.1995
(73) Patentinhaber: Uschkoreit, Dieter, 59174 Kamen (DE)
(72) Erfinder: Melber, Albrecht, Dr., D-64287 Darmstadt (DE); Wanetzky, Erwin, D-63538 Grosskrotzenburg (DE); Uschkoreit, Dieter, D-59174 Kamen (DE)
(74) Vertreter: Zapfe, Hans, Dipl.-Ing.

(56) Entgegenhaltungen:
- EP-A- 0 505 278
- EP-A- 0 632 119
- WO-A-95/08605
- WO-A-96/04409
- WO-A-96/04410
- DE-A- 2 456 134
- FR-A- 2 683 166
- GB-A- 320 874

## Beschreibung

Die Erfindung betrifft ein Verfahren zum thermischen Behandeln von Materialien mit Anteilen an verdampfbaren Stoffen nach dem Oberbegriff des Patentanspruchs 1.

Es geht dabei unter anderem um die Behandlung von Materialien wie Abfall und Müll mit organischen Bestandteilen wie Kohlenwasserstoffen einschließlich halogenierter Kohlenwasserstoffe und/oder anorganischen Bestandteilen wie Metalle, Filterstäube, Säuren, Laugen etc.. Zu diesen Materialien gehören Abfälle, einschließlich Müll, aber auch Wertstoffe wie Verbundmaterialien aus Metall und elastomeren Komponenten wie beispielsweise Altreifen, Lenkräder, Manschetten aus elastomeren Werkstoffen, Dichtungsringe, kontaminierte Böden etc..

Das Verfahren kann einerseits dazu dienen, die eingesetzten Materialien vollständig in unschädliche Feststoffe (Asche) und Gase umzusetzen, andererseits aber auch dazu, je nach verfahrensführung, mindestens einen Teil der Komponenten als Wertstoffe wiederzugewinnen, wie beispielsweise in Form von kondensierten Kohlenwasserstoffen und/oder Kohlenstoff, die sämtlich anderen und nützlichen Verwendungszwecken zugeführt werden können. Andererseits ist es natürlich auch möglich, die Kondensate und/oder den Kohlenstoff als Brennstoffe für die gesamte Entsorgung einzusetzen.

Durch die DE 41 12 593 A1 ist es bekannt, Abfälle mit organischen Komponenten in Gegenwart von Sauerstoff einem einstufigen Pyrolyseprozeß auszusetzen und hierbei Metalle, verglaste Baustoffe und Energie zu gewinnen. Es ist jedoch nicht möglich, fraktionierte Destillate zu gewinnen: vielmehr werden die gesamten gas- und dampfförmigen Pyrolyseprodukte einer Hochtemperaturvergasungsstufe zugeführt und restlos verbrannt. Mit Ausnahme von Metallen werden hierbei keine Wertstoffe zurückgewonnen.

Durch die DE 44 18 562 A1 ist ein Verfahren der eingangs beschriebenen Gattung bekannt, bei dem in einem einstufigen thermischen Prozeß Wertstoffe wieder gewonnen werden, die sowohl in Form von brennbaren Gasen, als auch in Form von Destillaten und versprödeten Umwandlungsprodukten der genannten Stoffe anfallen. Der Prozeß wird jedoch ausschließlich diskontinuierlich betrieben. wobei in der einzigen Behandlungskammer in zeitlicher Reihenfolge der Druck abgesenkt und die Temperatur angehoben wird. Dadurch entsteht ein Gemisch von Destillaten, das nachfolgend allenfalls durch eine aufwendige fraktionierte Destillation in die einzelnen Komponenten zerlegt werden kann. Hierbei ist der Füllungsgrad der Behandlungskammer ungünstig, da die eingesetzten Stoffe anfänglich ein großes Volumen aufweisen und erst im Verlaufe des thermischen Prozesses allmählich an Volumen verlieren.

Durch die FR-A-2 683 166 ist es bekannt, Abfälle wie Hausmüll mit mindestens 30 Gewichtsprozent Zelluloseanteil unter Zugabe eines Reaktionskatalysators wie Kalk, Kalziumkarbonat und kaustische Soda durch ein dreistufiges thermochemisches Verfahren bei geringem Unterdruck in mineralische Stoffe umzuwandeln. Dabei werden die Abfälle nacheinander durch drei Zonen eines waagrechten, rohrförmigen Reaktors hindurchgeführt. Die drei Zonen sind jedoch nicht voneinander abgesperrt oder absperrbar, weil dies schon durch ein in der Zeichnung dargestelltes Fördermittel verhindert wird. Als Unterdrücke mit steigender Tendenz, sind - ausgehend von Atmosphärendruck - in der Reihenfolge der Behandlung die Bereiche von 20 bis 25 mm WS, 30 bis 35 mm WS und 100 bis 120 mm WS angegeben. In den Zonen soll ein exothermer Pyrolysevorgang mit einer Maximaltemperatur von 250 °C ablaufen, wobei in allen Zonen im wesentlichen der Wasseranteil abgezogen wird. Die einzelnen Unterdrücke werden unter Zwischenschaltung von Drosselstellen über eine einzige Pumpe eingestellt. Im übrigen sind die einzelnen Zonen durch eine gemeinsame Rohrleitung jenseits der Drosselstellen miteinander verbunden. Verfahrensparameter und/oder Vorrichtungsmerkmale für den kontrollierten Abbau von Kunststoffen und/oder die Wiedergewinnung von Kohlenwasserstoffen aus den Kunststoffen sowie die Beseitigung von gasförmigen Schadstoffen vor dem Eintritt der Abgase in die Atmosphäre sind nicht angegeben. Vielmehr soll die Pyrolysetemperatur von 250°C für Kunststoffe ausdrücklich nicht überschritten werden. Die getrennte Rückgewinnung von Kohlenwasserstoffen durch fraktionierte Destillation und gezielte Kondensation ist mit dem bekannten Verfahren nicht beschrieben.

Durch die EP-A-0 505 278 ist ein dreistufiges Verfahren zur Thermolyse von gefährlichen Abfallstoffen bekannt, das in einer Vorrichtung mit drei Kammern durchgeführt wird, durch die der Stofftransport über Wagen erfolgt. In der ersten Kammer erfolgt eine Entwässerung oberhalb von 100°C, beispielsweise bei etwa 120 °C, in der zweiten Kammer die Thermolyse bei Temperaturen zwischen 400 °C und 750 °C, vorzugsweise bei 600 °C, und bei einem Druck unterhalb von 800 mbar, beispielsweise von 500 mbar. Dieser Druck soll in allen Kammern vorzugsweise gleich sein. In der dritten Kammer erfolgt lediglich eine Abkühlung, wobei Glas, Metalle und Schutt zurückbleiben. Die Pyrolysegase aus der zweiten Kammer werden gemeinsam über einen Gaswäscher und einen Abscheider geleitet, und die kondensierten Gase werden einem Sammelbehälter zugeführt, während die nicht kondensierten Gase nach dem Auswaschen von Kohlenstoffgasen mittels Kaliumkarbonat komprimiert und einem Zwischenspeicher zugeführt werden, von dem aus sie zur Beheizung des Systems durch innere katalytische Verbrennung verwendet werden. Durch die fehlende Druckabstufung zwischen den Kammern und insbesondere in der Pyrolysekammer und durch die gemeinsame Absaugung der Pyrolysegase aus dieser Kammer ist eine Aufspaltung der kondensierbaren Kohlenwasserstoffe in Fraktionen nicht möglich und auch nicht vorgesehen. Statt dessen erfolgt eine chemische Aufbereitung der abgesaugten Dämpfe. Durch die innere katalytische Verbrennung der zurückgeführten Kohlenwasserstoffe in den beiden ersten Kammern muß dem System Sauerstoff zugeführt werden, der auch zur vorzeitigen Verbrennung der Abfälle einschließlich eines Teils der Kohlenwasserstoffe führt Eine fraktionierte Destillation unterschiedlicher Kohlenwasserstoffe und eine getrennte Wiedergewinnung sind auch mit diesem Verfahren weder möglich noch hierbei vorgesehen. Die in der ersten Kammer freigesetzten Gase und Dämpfe gelangen ungefiltert an die Umgebung.

Der Erfindung liegt daher die Aufgabe zugrunde, ein Verfahren der eingangs beschriebenen Gattung anzugeben, das zumindest quasi-kontinuierlich durchgeführt werden kann und bei dem - zumindest in einer Zwischenstufe - Destillate der einzelnen Komponenten oder Komponentengruppen anfallen, die unterschiedlichen Verwendungszwecken zugeführt werden können, bei dem ein hoher Füllungsgrad der Anlage erreicht werden kann und bei dem am Ende der thermischen Behandlung ein ungefährlicher Feststoff vorliegt, der gleichfalls weiteren Verwendungszwecken zugeführt werden kann, sei es als Rohstoff für andere Produkte, sei es als Brennstoff für weitere Verfahrensstufen.

Die Lösung der gestellten Aufgabe erfolgt bei dem eingangs angegebenen Verfahren erfindungsgemäß durch die Merkmale im Kennzeichen des Patentanspruchs 1.

Dadurch, daß die Materialien während ihrer thermischen Behandlung in mehreren Verfahrensstufen unter Vakuum behandelt werden, wird eine erhebliche Verminderung des Schüttvolumens und/oder der Dichte der anfallenden Materialien erreicht, wobei zunächst schon flüchtige Bestandteile ohne Volumensvergrößerung der gasförmigen Bestandteile nacheinander abgezogen werden. Dadurch sind die behandelten Materialien nach dem Austritt aus der letzten Behandlungskammer zumindest weitgehend frei von flüchtigen Bestandteilen.

Es ist dabei besonders vorteilhaft, wenn die nicht kondensierten Dämpfe einer Hochtemperaturverbrennung bei mindestens 800 °C, vorzugsweise bei mindestens 1000 °C, zugeführt werden.

Die Hochtemperaturverbrennung der nicht kondensierten Dämpfe oder Gase kann dabei in einem der letzten Behandlungskammer nachgeschalteten Verbrennungsofen, sehr wohl aber auch in einer Hochtemperaturzone im Abgaskamin durchgeführt werden. Auf diese Weise wird die Abgabe schädlicher Dämpfe oder Gase an die Umwelt wirksam verhindert.

Andererseits ist es möglich, die aus der letzten Behandlungskammer ausgetragenen Feststoffe, die vorzugsweise aus einer koksartigen Masse bestehen, entweder einer Wiederverwendung zuzuführen, beispielsweise als Füllstoffe für andere Werkstoffe, oder aber auch diese Feststoffe unmittelbar einer Hochtemperaturverbrennung bei mindestens 800 °C, vorzugsweise bei mindestens 1000 °C, zuzuführen.

Es ist dabei wiederum besonders vorteilhaft, wenn die aus der Hochtemperaturverbrennung der Feststoffe stammenden Abgase einer Nachverbrennung im Abgaskamin zugeführt werden. Auf diese Weise wird sichergestellt, daß auch die aus der Hochtemperaturverbrennung hervorgehenden Abgase keine schädlichen Bestandteile mehr enthalten.

Die Hochtemperaturverbrennung erfolgt dabei unter Zusatz von Sauerstoff, vorzugsweise unter Zusatz von Verbrennungsluft.

Im Hinblick auf eine einfache Verfahrensführung ist es besonders vorteilhaft, wenn die Materialien von einer Behandlungskammer zur anderen im freien Fall transportiert werden. Hierdurch erfolgt im allgemeinen eine Auflockerung und Umschichtung der teilbehandelten Materialien, teilweise aber auch eine Zerkleinerung, wodurch die Wirksamkeit des Ausdampfens verdampfbarer Komponenten in der jeweils folgenden Behandlungskammer erleichtert wird.

Sämtliche durch die Hochtemperaturverbrennung gegangenen Stoffe sind frei von nicht oxidierten Bestandteilen, insbesondere frei von elementaren Metallen, Metallstäuben und ähnlichen anorganischen Bestandteilen. Sie sind aber auch völlig frei von organischen Bestandteilen. Gegebenenfalls sind die Abgase noch durch ein Rauchgasreinigungsverfahren zu leiten, um z.B. Chlor, Fluor und/oder deren Verbindungen zu binden.

Es ist dabei im Zuge einer wiederum weiteren Ausgestaltung des Erfindungsgegenstandes von Vorteil, wenn die Materialien zur Verlängerung der Verweilzeit in mindestens einer der Behandlungskammern vorübergehend in mindestens einer Auffangvorrichtung aufgefangen werden, die beispielhaft aus einem Zellenrad oder mehreren Zellenrädern oder aus einem schwenkbar aufgehängten Trog bestehen kann.

Auch der Einsatz dieser Auffangvorrichtungen fördert die Zerkleinerung der Materialien, aber auch deren Durchmischung während der Behandlung, so daß ständig neue Oberflächenelemente der Materialien dem Vakuum ausgesetzt werden und auch der Wärmeübergang verbessert wird.

Folgende Verfahrensvarianten sind dabei von besonders vorteilhaften Ergebnissen begleitet:

| Zwei-Kammer-Verfahren | | |
|---|---|---|
| | Druck [mbar] | Temperatur [°C] |
| 1. Kammer | 900 - 200 | 60 - 350 |
| 2. Kammer | 400 - 10-2 | 300 - 600 |

In der ersten Behandlungskammer werden bei dem hohen Druck vornehmlich Flüssigkeiten wie Wasser, Säuren und Laugen ausgedampft, in der letzten Behandlungskammer bei dem niedrigeren Druck z.B. Quecksilber und andere Schwermetalle, d.h., es werden Stoffe fraktioniert, die hinsichtlich ihrer Siedetemperaturen deutlich voneinander verschieden sind. Bevorzugte Anwendungsgebiete sind mit Schwermetallen verseuchte Böden und die Müllentsorgung.

| Drei-Kammer-Verfahren | | |
|---|---|---|
| | Druck [mbar] | Temperatur [°C] |
| 1. Kammer | 900 - 200 | 60 - 300 |
| 2. Kammer | 500 - 10 | 250 - 350 |
| 3. Kammer | 20 - 10⁻² | 300 - 600 |

Für die erste und die letzte Behandlungskammer gilt das vorstehend Gesagte. Durch eine entsprechende Druckabstufung, die jedoch von Kammer zu Kammer stets fallend ist, wird eine Verteilung der freigesetzten Gas- und Dampfmengen auf die einzelnen Kammem erreicht. Dieser sehr vorteilhafte Effekt wird von einem entsprechenden Temperaturanstieg begleitet, der am einfachsten dadurch zu erzielen ist, daß jede der Behandlungskammem mit einer Heizeinrichtung versehen ist, so daß die zu behandelnden Materialien zunehmend aufgeheizt werden. Die Beheizung kann dabei durch Gasbrenner oder aber auch - mit besonderem Vorteil - elektrisch erfolgen. In der mittleren Kammer werden bevorzugt Gummi, Kunststoffe, Lacke, Mineralöle, kohlestämmige Kohlenwasserstoffe, Fette, Verpackungsmaterial, Plastikartikel, Faserstoffe und Textilien verdampft bzw. verkokt.

Vorteile sind insbesondere: Durch die Aufteilung des notwendigen Behandlungsvolumens auf mindestens zwei Behandlungskammern wird eine entsprechend große einzige Behandlungskammer vermieden, die Kondensate fallen sauber getrennt voneinander an, und ein periodisches Aufheizen und Abkühlen großer Massen, wie es bei einer einzigen Behandlungskammer erforderlich wäre, entfällt. Beim Weitertransport der Materialien von einer zur jeweils nächsten Behandlungskammer ist es lediglich erforderlich, vor dem Öffnen des dazwischenliegenden Vakuumventils kurzzeitig einen Druckausgleich herbeizuführen, vorzugsweise in Richtung auf den Druck in der jeweils darüberliegenden Behandlungskammer.

Weitere vorteilhafte Ausgestaltungen des erfindungsgemäßen Verfahrens ergeben sich aus den übrigen Verfahrensansprüchen.

Die Erfindung betrifft auch eine Vorrichtung zur Durchführung des erfindungsgemäßen Verfahrens.

Zur Lösung der gleichen Aufgabe ist diese Vorrichtung gekennzeichnet durch mindestens zwei Behandlungskammern, die durch Vakuumventile gegeneinander, gegenüber der Atmosphäre und gegenüber nachgeschalteten Aggregaten absperrbar sind, und an Saugleitungen mit Kondensatoren angeschlossen sind.

Eine solche Vorrichtung schafft in besonders einfacher Weise die vorrichtungsseitigen Voraussetzungen für die Durchführung des erfindungsgemäßen Verfahrens. Bezüglich der dadurch erzielten Vorteile wird auf die weiter oben gemachten Ausführungen verwiesen.

Es ist dabei besonders vorteilhaft, wenn die Behandlungskammern in unterschiedlichen Höhen angeordnet sind, insbesondere dann, wenn die Behandlungskammern übereinander angeordnet und durch Fallschächte miteinander verbunden sind, in denen die Vakuumventile angeordnet sind. Auf diese Weise entsteht ein besonders platzsparender und kompakter Aufbau, und der freie Fall der Materialien durch die Fallschächte begünstigt eine Durchmischung, eine Zerkleinerung und eine Verdichtung, durch die der Füllungsgrad der einzelnen Behandlungskammem verbessert wird.

Es ist dabei im Zuge einer weiteren Ausgestaltung der erfindungsgemäßen Vorrichtung besonders vorteilhaft, wenn in mindestens einer der Behandlungskammern mindestens eine Auffangvorrichtung für die vorübergehende Aufnahme und anschließende Abgabe der Materialien angeordnet ist. Durch eine solche Auffangvorrichtung kann die Verweilzeit der Materialien in der betreffenden Behandlungskammer nahezu beliebig beeinflußt werden, so daß es möglich ist, die Materialien praktisch restlos von allen verdampfbaren Stoffen zu befreien, die bei dem gegebenen Druck und bei der gegebenen Temperatur entsprechend ihrem Dampfdruck verdampfbar sind.

Die vorstehend beschriebene Wirkung wird besonders zuverlässig dann erreicht, wenn die mindestens eine Auffangvorrichtung im Wirkungsbereich einer Heizeinrichtung angeordnet ist.

Die Auffangvorrichtung kann dabei beispielhaft als Zellenrad oder als Trog ausgebildet sein, wobei in besonders vorteilhafter Weise mehrere Zellenräder oder Tröge in Transportrichtung der Materialien untereinander angeordnet sind. Die räumliche Anordnung ist dabei so zu treffen, daß das jeweils von einer oberen Auffangvorrichtungfreigegebene Material restlos in die darunter angeordnete Auffangvorrichtung fallen kann. Durch Korrelation der Dreh-oder Schwenkbewegungen mittels zugehöriger Antriebseinrichtungen kann dieser Stofftransport zuverlässig erreicht werden. Durch die Wirkung der Auffangvorrichtung und das schrittweise Weitergeben der Materialien erfolgt eine Zerkleinerung, eine Erhöhung der Schüttdichte, ein verbesserter Stoffund Wärmeübergang, und durch die Summe dieser Einflüsse eine Verbesserung des Entgasungseffekts. Weiterhin wird durch derartige Auffangvorrichtungen dafür gesorgt, daß eine mechanische Beanspruchung der Böden der einzelnen Behandlungskammern unterbleibt, was insbesondere im Hinblick auf den Verschleiß des Bodenmaterials von Vorteil ist.

Die erfindungsgemäßen Auffangvorrichtungen, von denen besonders vorteilhafte weitere Ausgestaltungen in den übrigen Vorrichtungsansprüchen enthalten sind, lösen auf besonders einfache Weise die Aufgabe, das in den Behandlungskammern zu behandelnde Material umzuwälzen, umzuschichten, vorübergehend aufzulokkern und schließlich wieder zu verdichten, ohne daß damit ein mechanischer Verschleiß der Kammerwandungen oder Kammerböden verbunden wäre, und insbesondere ist durch die Wirkung der jeweils letzten Auffangvorrichtung auch ein verschleißarmes Austragen des Materials aus der Behandlungskammer möglich.

Ausführungsbeispiele des Erfindungsgegenstandes werden nachstehend anhand der Figuren 1 bis 4 näher erläutert.

Es zeigen:
- Figur 1: eine schematische Darstellung einer erfindungsgemäßen Behandlungsanlage mit nachgeschalteten Einrichtungen für die Hochtemperaturverbrennung von Feststoffen, Abgasen und Dämpfen,
- Figur 2: einen Vertikalschnitt durch ein erstes Ausführungsbeispiel einer Behandlungskammer nach Figur 1,
- Figur 3: einen Vertikalschnitt durch ein zweites Ausführungsbeispiel einer Behandlungskammer nach Figur 1 und
- Figur 4: einen stark schematisierten Vertikalschnitt durch eine Anlage analog Figur 1, jedoch mit Trögen in den einzelnen Behandlungskammern anstelle der Zellenräder gemäß den Figuren 2 und 3.

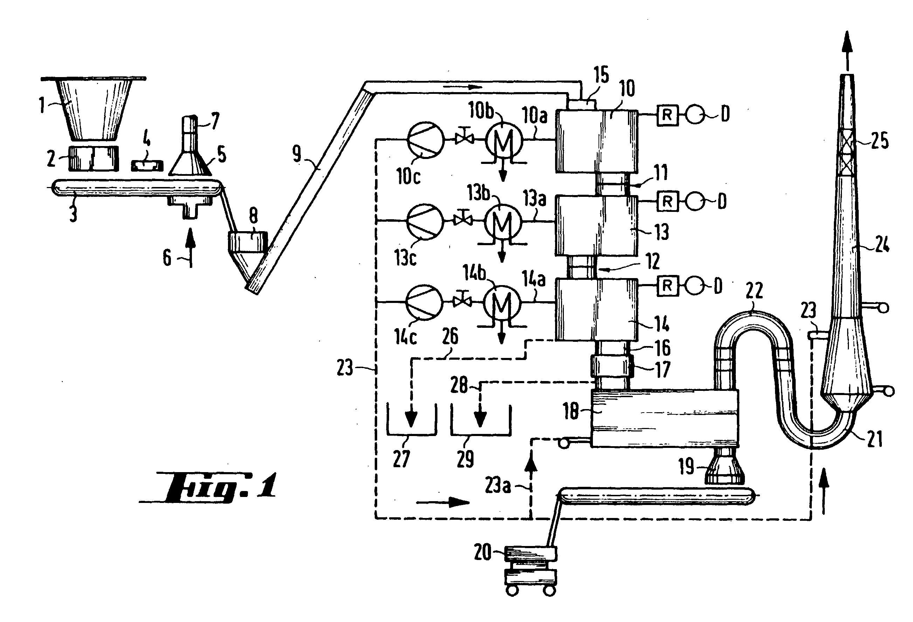

In Figur 1 werden die zu behandelnden Materialien durch eine Eingabevorrichtung 1 über eine Mahlvorrichtung 2 auf einem Förderband 3 abgelegt. Etwa vorhandene lose metallische Komponenten können durch einen Metallabscheider 4 aussortiert werden. Mittels des Förderbandes 3 werden die zerkleinerten Materialien einer Vortrocknungseinrichtung 5 zugeführt, die in Richtung des Pfeils 6 von unten her mit Heißluft betrieben werden kann. Die Absaugung der befeuchteten Trocknungsluft erfolgt über eine Saugleitung 7. Nachfolgend werden die Materialien nochmals in einer Mahlvorrichtung 8 zerkleinert und an eine Fördereinrichtung 9 abgegeben, die sich aus einem Schrägförderer und einem nachgeschalteten Horizontalförderer zusammensetzt.

Mittels der Fördereinrichtung 9 werden die Materialien in eine erste Behandlungskammer 10 eingebracht, an die sich zwei darunterliegende Behandlungskammern 13 und 14 anschließen. Zwischen den Behandlungskammern 10 und 13 ist ein Vakuumventil 11 und zwischen den Behandlungskammern 13 und 14 ist ein Vakuumventil 12 angeordnet. Die Vakuumventile 11 und 12 sind in je einem nicht näher hervorgehobenen Fallschacht angeordnet, der die einzelnen Behandlungskammern miteinander verbindet. Am Eingang der ersten Behandlungskammer 10 befindet sich ein weiteres Vakuumventil 15, und am Ausgang der letzten Behandlungskammer 14 befindet sich ein Vakuumventil 16, so daß die drei Behandlungskammern gegeneinander, gegenüber der Atmosphäre und gegenüber den nachgeschalteten Aggregaten absperrbar sind, um die erforderliche Druckabstufung zu gewährleisten. An die einzelnen Behandlungskammern 10, 13 und 14 sind Saugleitungen 10a, 13a und 14a angeschlossen, die über Kondensatoren 10b, 13b und 14b zu Vakuumpumpen 10c, 13c und 14c führen. Die einzelnen Behandlungskammern 10, 13 und 14 sind mit in Figur 1 nicht näher dargestellten Heizeinrichtungen versehen, wobei die erforderlichen Behandlungstemperaturen durch Regler R einstellbar sind. Die auf konstante Werte geregelten Temperaturen werden durch Anzeigegeräte D zur Anzeige gebracht. Durch einen zugehörigen, aber nicht dargestellten, Zentralprozessor werden in den einzelnen Behandlungskammern 10, 13 und 14 Temperatur und Druckwerte eingestellt, die innerhalb der weiter oben angegebenen Tabelle mit der Überschrift "Drei-Kammer-Verfahren" zu finden sind.

Die abgezogenen Dämpfe werden in den Kondensatoren 10b, 13b und 14b kondensiert, und die jeweils kondensierte Fraktion wird über die eingezeichneten Pfeile aus den Kondensatoren abgezogen und entweder einem Wiederverwertungsprozeß oder einem Verbrennungsprozeß zugeführt, gegebenenfalls sogar innerhalb der in Figur 1 gezeigten Anlage.

In der letzten Behandlungskammer 14 liegen die ursprünglich organischen Komponenten der Materialien in der Regel in Form von Koks vor, der über das Vakuumventil 16 abgeführt und einer weiteren Mahlvorrichtung 17 zugeführt wird. Über diese Mahlvorrichtung 17 gelangt der Koks in einen Hochtemperatur-Verbrennungsofen 18, in dem eine Verbrennung bei Temperaturen von mindestens 800 °C, vorzugsweise von mindestens 1000 °C, unter Sauerstoff- oder Luftzufuhr bei Normaldruck erfolgt. Aus dem Hochtemperatur-Verbrennungsofen 18 werden die festen Verbrennungsrückstände über die Austragsvorrichtung 19 abgezogen und in einen Container 20 abgefüllt und abtransportiert.

Die im Hochtemperatur-Verbrennungsofen 18 entstehenden Abgase werden zu einem Abgaskamin 21 geführt, wobei sie eine Kühlungsstufe 22 durchlaufen, in der eine Wärmerückgewinnung durchgeführt werden kann.

Die über die Vakuumpumpen 10c, 13c und 14c abgesaugten, nicht kondensierten Komponenten, werden einer Sammelleitung 23 zugeführt, deren linker Verlauf nur gestrichelt dargestellt ist. Diese gasförmigen Komponenten werden über die Sammelleitung ebenfalls in den Abgaskamin 23 eingespeist. In einer Hochtemperatur-Verbrennungszone 24 des Abgaskamins 21 werden diese Abgase gleichfalls unter Sauerstoffzufuhr oder Luftzufuhr vollständig mit Sauerstoff umgesetzt und verbrannt. Es ist alternativ möglich, die nicht kondensierten Gase bzw. Dämpfe über eine Zweigleitung 23a dem Hochtemperatur-Verbrennungsofen 18 zuzuführen, indem sie gleichfalls zumindest weitgehend verbrannt werden. Etwaige unverbrannte Bestandteile werden dann über die Kühlungsstufe 22 wiederum dem Abgaskamin 21 zugeführt, in dem sie gleichfalls die Hochtemperatur-Verbrennungszone 24 durchlaufen müssen. In dem Abgaskamin 21 ist ein Wärmetauscher 25 angeordnet, der gleichfalls zur Wärmerückgewinnung dient. Beispielsweise kann mittels des Wärmetauschers 25 diejenige Trocknungsluft erwärmt werden, durch die die Materialien in der Vortrocknungseinrichtung 5 getrocknet werden.

Es ist aber keineswegs zwingend, die aus der letzten Behandlungskammer 14 ausgetragenen festen Reststoffe dem Hochtemperatur-Verbrennungsofen 18 zuzuführen. Bei metallischen Reststoffen, wie sie beispielsweise bei Verbundmaterialien wie Autoreifen, Lenkrädem oder Dichtungsringen vorliegen, können die teilweise recht sperrigen metallischen Rückstände über einen Transportweg 26 einem Metall-Sammelbehälter 27 zugeführt werden. Auch kann das verkokte organische Material hinter der Mahlvorrichtung 17 über eine Leitung 28 einem Sammelbehälter 29 zugeführt werden. Die in den Sammelbehältem 27 und 29 gesammelten festen Rückstände können damit einer Wiederverwertung zugeführt werden, beispielsweise in Stahlwerken, in denen die koksartigen Rückstände als Heizmaterial dienen können.

Um zu erreichen, daß möglichst wenig Luft mit den Materialien in die Anlage eingeschleppt wird, kann das Vakuumventil 15 als Schleuse mit einer Zwischenabsaugung ausgebildet sein. Es ist aber auch möglich, einen großen Anteil der eingeschleppten Umgebungsluft zunächst aus der Behandlungskammer 10 abzuziehen, wobei möglichst niedrige Temperaturen einzustellen sind, um einen Verbrennungsvorgang zu verhindern.

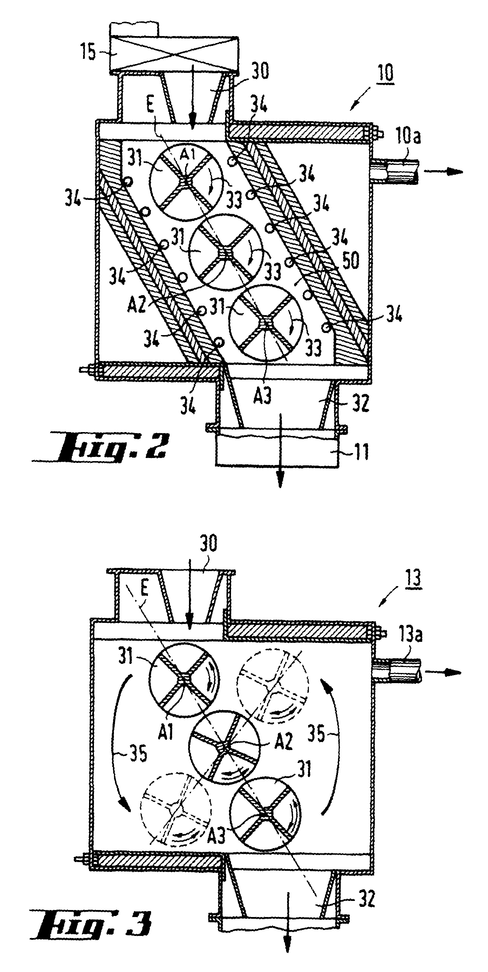

In Figur 2 ist ein Vertikalschnitt durch eine der Behandlungskammern gezeigt, im vorliegenden Fall durch die Behandlungskammer 10, wobei die zeichnerische Darstellung auch für den inneren Aufbau der weiteren Behandlungskammern 13 und 14 steht. Es wird jedoch betont, daß nicht jede dieser Behandlungskammern gemäß Figur 2 ausgebildet sein muß. Die Behandlungskammer 10 ist zwischen den Vakuumventilen 15 und 11 angeordnet. Die Materialien gelangen über eine Einfüllöffnung 30 in die Behandlungskammer 10. In dieser sind mehrere drehbare Auffangbehälter 31 angeordnet, deren waagrechte Drehachsen mit A1, A2 und A3 bezeichnet sind. Eine erste Auffangvorrichtung 31 ist in Fallrichtung der Materialien unmittelbar unterhalb der Einfüllöffnung 30 angeordnet. Eine zweite Auffangvorrichtung 31 ist in Fallrichtung der Materialien unterhalb der ersten Auffangvorrichtung 31 so angeordnet, daß die Materialien bei deren Drehung um die Achse A1 in die zweite Auffangvorrichtung 31 fallen. In Fallrichtung darunter ist eine dritte Auffangvorrichtung 31 angeordnet, wobei die von dieser Auffangvorrichtung 31 abgeworfenen Materialien unmittelbar in eine Ausgangsöffnung 32 fallen.

Im Falle von Figur 2 wird jede Auffangvorrichtung durch ein Zellenrad mit jeweils vier Zellen gebildet, die stirnseitig entweder durch Kreisscheiben (wie gezeichnet) oder durch die Wandung der Behandlungskammer 10 gebildet werden.

Die Auffangvorrichtungen 31 sind jeweils mit einem nicht gezeigten Drehantrieb gekoppelt. Die waagrechten Drehachsen A1, A2 und A3 liegen in einer Ebene E, die unter einem spitzen Winkel zu einer Senkrechten verläuft. Dabei sind die Drehachsen A1, A2 und A3 jeweils etwa um den Radius einer Auffangvorrichtung 31 gegenüber einer Vertikalebene quer versetzt angeordnet, und zwar jeweils in Abwurfrichtung der darüberliegenden Auffangvorrichtung 31, so daß beim Abwerfen der Materialien in jedem Fall die darunterliegende Öffnung der jeweiligen Auffangvorrichtung getroffen wird. Die gleichsinnige Drehrichtung der einzelnen Auffangvorrichtungen ist durch die Pfeile 33 angegeben. Bei entsprechender Synchronisation können die aufeinanderfolgenden Zellenräder auch gegensinnig angetrieben werden.

Die Behandlungskammer 10 ist mit Heizeinrichtungen 34 versehen, die bevorzugt als elektrische Heizelemente ausgebildet sind, aber auch als sogenannte Gasstrahlrohre ausgeführt sein können, die keine Gase in die Behandlungskammer 10 abgeben. Durch nicht näher bezeichnete Wärmedämmungen wird erreicht, daß die Wärmeentwicklung auf den Innenraum 50 der Behandlungskammer 10 beschränkt ist. Durch die Vakuumventile 15 und 11 kann die Behandlungskammer 10 in sich gasdicht abgeschlossen werden. Dadurch ist es möglich, in jeder der Behandlungskammern eine thermische Behandlung unter Luftabschluß durchzuführen, wobei spätestens in der Behandlungskammer 14 eine Verkokung und Versprödung der Materialien erfolgt.

Mittels einer Vorrichtung nach Figur 2 ist es auch möglich, flüssige oder zähflüssige Materialien von einer Auffangvorrichtung 31 an die jeweils nachfolgende Auffangvorrichtung abzugeben.

Die Verweilzeit der Materialien in den Behandlungskammern ist damit in einfacher Weise festzulegen, wobei die Materialien durch die Abgabe von einer Auffangvorrichtung an die jeweils nachfolgende umgewälzt, umgeschichtet und aufgelockert werden, so daß eine durchgreifende thermische Behandlung bis zur Verkokung möglich ist.

Es ist dabei nicht erforderlich, die Zellenräder mit jeweils vier Zellen auszubilden; vielmehr kann auch eine größere Zahl von Zellen durch entsprechende Erhöhung der Zahl der Zwischenwände gebildet werden.

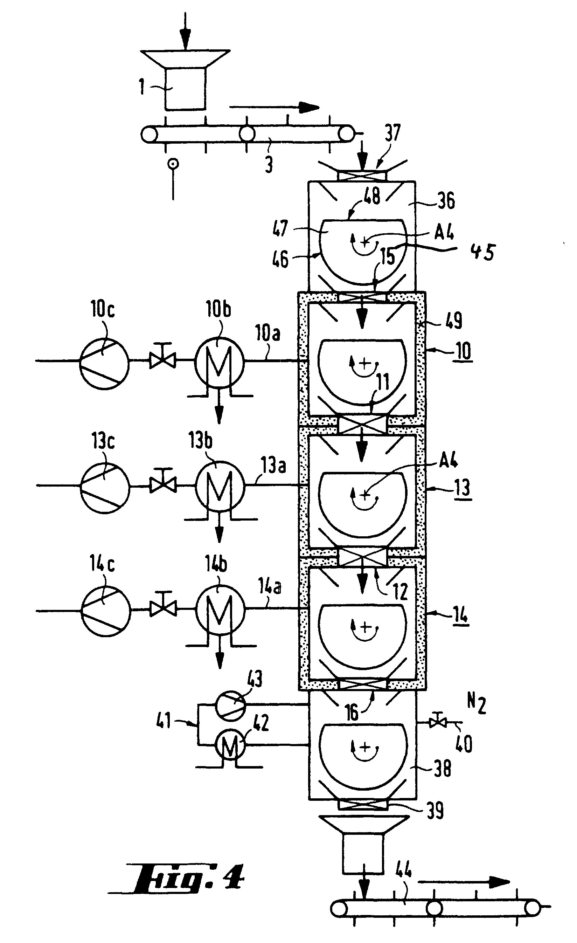

Figur 3 zeigt eine Weiterbildung des Gegenstandes nach Figur 2, wobei allerdings die Heizeinrichtungen 34 und die zugehörigen Wärmedämmungen weggelassen worden sind. In diesem Fall ist die Ebene E mit den Drehachsen A1, A2 und A3 der Zellenräder derart um eine Mittenachse drehbar, daß das jeweils unterste Zellenrad mit seinem Inhalt an Materialien durch einen weiteren Drehantrieb in eine Höchststellung schwenkbar ist, und zwar derart, daß die Materialien emeut von oben nach unten durch die jeweilige Behandlungskammer transportierbar sind. Im vorliegenden Fall stimmt die Raumlage der Ebene E in Figur 3 mit derjenigen nach Figur 2 überein. Ferner stimmt die Mittenachse, um die die gesamte Anordnung drehbar ist, mit der Drehachse A2 des mittleren Zellenrades überein. Aus dieser Ausgangslage kann jetzt die gesamte Anordnung von Zellenrädern in Richtung der Pfeile 35 gedreht bzw. verschwenkt werden, wobei die beiden äußersten Zellenräder in die gestrichelt dargestellte Position gelangen. Durch eine entsprechende Steuerung der nicht dargestellten Drehantriebe sowie gegebenenfalls durch eine Drehrichtungsumkehr der Zellenräder kann erreicht werden, daß auch in der neuen Stellung der Zellenräder dieselben Abwurf- und Auffangverhältnisse erreicht werden, wie sie in Figur 2 dargestellt sind. Hieraus ergibt sich, daß die thermisch zu behandelnden Materialien im Grunde beliebig oft in der gleichen Behandlungskammer umgeschichtet werden können, wodurch die Verweilzeit im Ergebnis beliebig lange ausgedehnt werden kann, bis entsprechende Analysenergebnisse zeigen, daß die Materialien in jeder Behandlungskammer die hierfür vorgegebenen Endzustände erreicht haben. Im Falle von Figur 3 sei angenommen, daß es sich um die Behandlungskammer 13 handelt.

In Figur 4 werden für gleiche Teile oder Teile mit gleicher Funktion die gleichen Bezugszeichen verwendet. Unterschiedlich zu den Figuren 1 bis 3 sind jedoch folgende Details:

Dem Vakuumventil 15 am Eingang der ersten Behandlungskammer 10 ist eine spezielle Schleusenkammer 36 mit einem zusätzlichen Vakuumventil 37 vorgeschaltet. Diese Schleusenkammer kann in einer hier nicht gezeigten Weise an eine Vakuumpumpe angeschlossen sein, so daß eine Vorevakuierung der Schleusenkammer erfolgen kann, um die Materialien mindestens teilweise von Lufteinschlüssen zu befreien. An die letzte Behandlungskammer 14 bzw. an das Vakumventil 16 schließt sich eine Kühlkammer 38 mit einem weiteren Vakuumventil 39 an, so daß in der Kühlkammer 38 durch Zufuhr von Stickstoff über eine Leitung 40 eine inerte Atmosphäre bei höherem Druck aufgebaut werden kann, durch die das Abkühlen der erhitzten Materialien beschleunigt wird. Zur Kühlung der Stickstoffatmosphäre ist ein Kühlwasser-Kreislauf 41 vorgesehen, zu dem ein Wärmetauscher 42 und eine Umwälzpumpe 43 gehören. Aus der Kühlkammer 38 werden die behandelten Materialien über das Vakuumventil 39 ausgetragen und auf einem Förderband 44 einer weiteren Verwendung und/oder Entsorgung zugeführt.

Als wesentlichster Unterschied zu den Gegenständen nach den Figuren 2 und 3 sind in diesem Falle jedoch Auffangvorrichtungen 45 vorgesehen, die als oben offene Tröge ausgebildet sind, die um eine in ihrer senkrechten Symmetrieebene liegende Drehachse A4 schwenkbar aufgehängt und mit nicht gezeigten Drehantrieben verbunden sind. Die Tröge besitzen eine teilzylindrische Mantelwand 46 und an beiden Enden Stirnwände 47, die als Segmente von Kreisscheiben ausgebildet sind, so daß die Tröge Öffnungen 48 besitzen, durch die die zu behandelnden Materialien einfüllbar und wieder ausschüttbar sind. Die waagrechten Drehachsen sämtlicher Tröge sind in einer senkrechten Ebene angeordnet, da in diesem Fall wegen des großen Querschnitts der Öffnungen 48 und wegen des Vorhandenseins nicht näher bezeichneter Leitvorrichtungen im Bereich der Vakuumventile 15, 11, 12 und 16 dafür gesorgt ist, daß die jeweils von einer oberen Auffangvorrichtung ausgekippten Materialien auch restlos in die jeweils darunterliegende Auffangvorrichtung gelangen. Vor allem aber wird durch die trogförmige Ausbildung der Auffangvorrichtungen erreicht, daß ein wesentlich größerer Füllungsgrad der einzelnen Kammern erreicht wird, wodurch der Durchsatz gegenüber Vorrichtungen nach den Figuren 2 und 3 entsprechend gesteigert werden kann. Bei der Vorrichtung nach Figur 4 bilden sämtliche Behandlungskammern 10, 13 und 14 sowie die Schleusenkammer 36 und die Abkühlkammer 38 einen senkrechten Turm, bei dem die Behandlungskammern 10, 13 und 14 von einer durchgehenden Wärmedämmung 49 umgeben sind.

Verfahren und Vorrichtung ermöglichen eine große Flexibilität. Kleine Materialmengen können nacheinander durch sämtliche Behandlungskammern hindurchgeschleust werden. Bei großen Materialmengen können diese portionsweise gleichzeitig in den einzelnen Kammern behandelt und von Kammer zu Kammer weiter transportiert werden. Die Behandlungskammern können auch unterschiedliche Volumina aufweisen, wobei die erste Kammer das größte Volumen aufweist und die nachfolgenden Kammern kleinere Volumina besitzen. Auf diese Weise können die Kammervolumina den schrumpfenden Materialmengen angepaßt werden.

## Patentansprüche

1. Verfahren zum thermischen Behandeln von Materialien mit Anteilen an verdampfbaren Stoffen bei Unterdruck und ohne Zufuhr von Sauerstoff und bei abnehmenden Drücken und zunehmenden Temperaturen unter Bildung von Gasen, Dämpfen, Kondensaten und Feststoffen zum Zwecke der Aufbereitung und/oder Entsorgung, **dadurch gekennzeichnet**, daß die Materialien nacheinander in mindestens zwei während der Behandlung gegeneinander abgesperrte und zum Zwecke des Materialtransports miteinander verbundene Behandlungskammern (10, 13, 14) eingebracht werden, wobei in den aufeinander folgenden Behandlungskammern (10, 13, 14) der Druck jeweils niedriger und die Temperatur jeweils höher ist als in der vorherigen Behandlungskammer, und daß die verdampfbaren Stoffe aus jeder Behandlungskammer (10, 13, 14) getrennt abgezogen und mindestens teilweise kondensiert und aufgefangen werden und daß die Feststoffe aus der letzten Behandlungskammer (14) ausgetragen werden.

2. Verfahren nach Anspruch 1, **dadurch gekennzeichnet**, daß die nicht kondensierbaren Dämpfe einer Hochtemperaturverbrennung bei mindestens 800 °C, vorzugsweise bei mindestens 1000 °C, zugeführt werden.

3. Verfahren nach Anspruch 2, **dadurch gekennzeichnet**, daß die nicht kondensierten Dämpfe einer Hochtemperaturverbrennung in einem Abgaskamin (21) zugeführt werden.

4. Verfahren nach Anspruch 1, **dadurch gekennzeichnet**, daß die aus der letzten Behandlungskammer (14) ausgetragenen Feststoffe einer Wiederverwendung zugeführt werden.

5. Verfahren nach Anspruch 1, **dadurch gekennzeichnet**, daß die aus der letzten Behandlungskammer (14) ausgetragenen Feststoffe unmittelbar einer Hochtemperaturverbrennung bei mindestens 800 °C, vorzugsweise bei mindestens 1000 °C, zugeführt werden.

6. Verfahren nach Anspruch 1, **dadurch gekennzeichnet**, daß mindestens ein Teil der aus den einzelnen Behandlungskammern (10, 13, 14) gewonnenen Kondensate einem Verbrennungsvorgang zugeführt wird.

7. Verfahren nach Anspruch 5, **dadurch gekennzeichnet**, daß die aus Hochtemperaturverbrennung der Feststoffe stammenden Abgase einer Nachverbrennung im Abgaskamin (21) zugeführt werden.

8. Verfahren nach Anspruch 1, **dadurch gekennzeichnet**, daß die Materialien spätestens in der letzten Behandlungskammer (14) in einen verkokten Zustand übergeführt werden.

9. Verfahren nach Anspruch 1, **dadurch gekennzeichnet**, daß die Materialien von einer Behandlungskammer (10, 13, 14) zur anderen im freien Fall transportiert werden.

10. Verfahren nach Anspruch 1, **dadurch gekennzeichnet**, daß die Materialien zur Verlängerung der Verweilzeit in mindestens einer der Behandlungskammern (10, 13, 14), vorübergehend in mindestens einer Auffangvorrichtung (31, 45) aufgefangen werden.

11. Verfahren nach Anspruch 1, **dadurch gekennzeichnet**, daß bei einer Behandlung der Materialien unter Vakuum in zwei Behandlungskammern in der ersten Behandlungskammer ein Druck zwischen 900 und 200 mbar und eine Temperatur zwischen 60 °C und 350 °C und in der zweiten Behandlungskammer ein Druck zwischen 400 und 10⁻² mbar und eine Temperatur zwischen 300 °C und 600 °C gewählt werden.

12. Verfahren nach Anspruch 1, **dadurch gekennzeichnet**, daß bei einer Behandlung der Materialien unter Vakuum in drei Behandlungskammern (10, 13, 14) in der ersten Behandlungskammer (10) ein Druck zwischen 900 und 200 mbar und eine Temperatur zwischen 60 °C und 300 °C, in der zweiten Behandlungskammer (13) ein Druck zwischen 500 und 10 mbar und eine Temperatur zwischen 250 °C und 350 °C, und in der dritten Behandlungskammer (14) ein Druck zwischen 20 und 10⁻² mbar und eine Temperatur zwischen 300 °C und 600 °C gewählt werden.

13. Verfahren nach Anspruch 1, **dadurch gekennzeichnet**, daß die Materialien in mindestens einer der Behandlungskammern (10, 13, 14) während der Behandlung durchmischt werden.

14. Verfahren nach Anspruch 1, **dadurch gekennzeichnet**, daß die Materialien vor der Eingabe in die erste Behandlungskammer (10) einem Zerkleinerungsvorgang ausgesetzt werden.

15. Verfahren nach Anspruch 1, **dadurch gekennzeichnet**, daß die Materialien vor der Eingabe in die erste Behandlungskammer (10) einem Trocknungsvorgang ausgesetzt werden.

16. Verfahren nach Anspruch 1, **dadurch gekennzeichnet**, daß die gebildeten Feststoffe nach dem Austrag aus der letzten Behandlungskammer (14) einem Mahlvorgang ausgesetzt werden.

17. Vorrichtung zur Durchführung des Verfahrens nach Anspruch 1,**gekennzeichnet durch** mindestens zwei Behandlungskammern (10, 13, 14), die durch Vakuumventile (11, 12, 15, 16) gegeneinander, gegenüber der Atmosphäre und gegenüber nachgeschalteten Aggregaten (17, 18) absperrbar sind, und an Saugleitungen (10a, 13a, 14a) mit Kondensatoren angeschlossen sind.

18. Vorrichtung nach Anspruch 17, **dadurch gekennzeichnet**, daß die Behandlungskammern (10, 13, 14) in unterschiedlichen Höhen angeordnet sind.

19. Vorrichtung nach Anspruch 18, **dadurch gekennzeichnet**, daß die Behandlungskammern (10, 13, 14) nacheinander angeordnet und durch Fallschächte miteinander verbunden sind, in denen die Vakuumventile (11, 12) angeordnet sind.

20. Vorrichtung nach Anspruch 17, **dadurch gekennzeichnet**, daß der letzten Behandlungskammer (14) ein Verbrennungsofen (19) und ein Abzugskamin (21) nachgeschaltet sind.

21. Vorrichtung nach Anspruch 17, **dadurch gekennzeichnet**, daß der Ausgang mindestens einer der Vakuumpumpen (10c, 13c, 14c) einem Hochtemperaturaggregat (Verbrennungsofen 18, Verbrennungszone 24) aufgeschaltet ist.

22. Vorrichtung nach Anspruch 17, **dadurch gekennzeichnet**, daß der Flüssigkeits-Ausgang mindestens eines der Kondensatoren (10b, 13b, 14b) einem Hochtemperaturaggregat (Verbrennungsofen 18, Verbrennungszone 24) aufgeschaltet ist.

23. Vorrichtung nach Anspruch 17, **dadurch gekennzeichnet**, daß in mindestens einer der Behandlungskammern (10, 13, 14) mindestens eine Auffangvorrichtung (31, 45) für die vorübergehende Aufnahme und anschließende Abgabe der Materialien unter Vakuum angeordnet ist.

24. Vorrichtung nach Anspruch 23, **dadurch gekennzeichnet**, daß die mindestens eine Auffangvorrichtung (31, 45) im Wirkungsbereich einer Heizeinrichtung (34) angeordnet ist.

25. Vorrichtung nach Anspruch 24, **dadurch gekennzeichnet**, daß bei einer Reihenanordnung mehrerer Auffangvorrichtungen (31, 45) die jeweils nachfolgende Auffangvorrichtung in Fallrichtung der Materialien angeordnet ist.

26. Vorrichtung nach Anspruch 23, **dadurch gekennzeichnet,** daß die mindestens eine Auffangvorrichtung (31) als Zellenrad ausgebildet und mit einem Drehantrieb verbunden ist.

27. Vorrichtung nach Anspruch 26, **dadurch gekennzeichnet,** daß die waagrechten Drehachsen (A1, A2, A3) der Zellenräder in einer Ebene (E) angeordnet sind, die unter einem spitzen Winkel zu einer Senkrechten verläuft.

28. Vorrichtung nach Anspruch 27, **dadurch gekennzeichnet**, daß der spitze Winkel der Ebene (E) so gewählt ist, daß die Drehachsen (A1, A2, A3) der Zellenräder um jeweils etwa den Radius der Zellenräder versetzt angeordnet sind.

29. Vorrichtung nach Anspruch 27, **dadurch gekennzeichnet**, daß die Ebene (E) mit den Drehachsen (A1, A2, A3) der Zellenräder derart um eine Mittenachse drehbar ist. daß das jeweils unterste Zellenrad durch einen weiteren Drehantrieb in eine Höchststellung schwenkbar ist, derart, daß die Materialien erneut von oben nach unten durch die jeweilige Behandlungskammer (10, 13, 14) transportierbar sind.

30. Vorrichtung nach Anspruch 23, **dadurch gekennzeichnet**, daß der mindestens eine Auffangbehälter (45) als oben offener Trog ausgebildet ist, der um eine in seiner senkrechten Symmetrieebene liegende Drehachse (A4) schwenkbar aufgehängt und mit einem Drehantrieb verbunden ist.

31. Vorrichtung nach Anspruch 30, **dadurch gekennzeichnet**, daß der Trog eine teilzylindrische Mantelwand (46) besitzt.

32. Vorrichtung nach Anspruch 30, **dadurch gekennzeichnet**, daß die waagrechten Drehachsen (A4) mehrere Tröge in einer senkrechten Ebene angeordnet sind.

33. Vorrichtung nach Anspruch 32, **dadurch gekennzeichnet**, daß die Drehachsen (A4) mit getrennt steuerbaren Drehantrieben versehen sind.

34. Vorrichtung nach Anspruch 17, **dadurch gekennzeichnet**, daß mindestens ein Teil der Behandlungskammern (10, 13, 14) einen senkrechten Turm bilden, der von einer durchgehenden Wärmedämmung (49) umgeben ist.

35. Vorrichtung nach Anspruch 17, **dadurch gekennzeichnet**, daß der letzten Behandlungskammer (14) eine Kühlkammer (38) für die Feststoffe nachgeschaltet ist.

## Claims

1. Process for thermal treatment of materials containing vapourizable materials at negative pressure and without delivery of oxygen and with decreasing pressures and increasing temperatures whilst forming gases, vapours, condensates and solids for the purpose of processing and/or disposal, **characterised in that** the materials are one after the other delivered into at least two treatment chambers (10, 13, 14), which are during treatment separated from each other and for the purpose of material transport interconnected, and in the successive treatment chambers (10, 13, 14) the pressure is respectively lower and the temperature respectively higher than in the previous treatment chamber, and the vapourizable materials are separately extracted from each treatment chamber (10, 13, 14) and at least partially condensed and captured, and the solids are discharged from the last treatment chamber (14).

2. Process according to Claim 1, **characterised in that** non-condensable vapours are delivered to high-temperature combustion at minimum 800°C, preferably at least 1,000°C.

3. Process according to Claim 2, **characterised in that** not condensed vapours are delivered to high-temperature combustion in a waste-gas chimney (21).

4. Process according to Claim 1, **characterised in that** solids discharged from the last treatment chamber (14) are delivered for re-use.

5. Process according to Claim 1, **characterised in that** solids discharged from the last treatment chamber (14) are directly delivered to high-temperature combustion at a minimum of 800°C, preferably at least 1,000°C.

6. Process according to Claim 1, **characterised in that** at least a portion of condensates obtained from the individual treatment chambers (10, 13, 14) is delivered to a combustion process.

7. Process according to Claim 5, **characterised in that** waste gases originating from high-temperature combustion of solids are delivered to post-combustion in the waste-gas chimney (21).

8. Process according to Claim 1, **characterised in that** the materials are at the latest in the last treatment chamber (14) transferred into a coked state.

9. Process according to Claim 1, **characterised in that** the materials are transported in free fall from one treatment chamber (10, 13, 14) to another.

10. Process according to Claim 1, **characterised in that** the materials are, for the purpose of extending the resident time in at least one of the treatment chambers (10, 13, 14), temporarily caught in at least one collecting device (31, 45).

11. Process according to Claim 1, **characterised in that** during treatment of the materials under vacuum in two treatment chambers, a pressure between 900 and 200 mbar and a temperature between 60°C and 350°C in the first treatment chamber and a pressure between 400 and 10⁻² mbar and a temperature between 300°C and 600°C in the second treatment chamber is selected.

12. Process according to Claim 1, **characterised in that** during treatment of materials under vacuum in three treatment chambers (10, 13, 14), a pressure between 900 and 200 mbar and a temperature between 60°C and 300°C in the first treatment chamber (10), and a pressure between 500 and 10 mbar and a temperature between 250°C and 350°C in the second treatment chamber (13), and a pressure between 20 and 10⁻² and a temperature between 300°C and 600°C in the third treatment chamber (14) is selected.

13. Process according to Claim 1, **characterised in that** the materials are in at least one of the treatment chambers (10, 13, 14) mixed through during treatment.

14. Process according to Claim 1, **characterised in that** the materials are prior to being fed into the first treatment chamber (10) subjected to a reduction process.

15. Process according to Claim 1, **characterised in that** the materials are prior to being fed into the first treatment chamber (10) subjected to a drying process.

16. Process according to Claim 1, **characterised in that** developed solids are after discharge from the last treatment chamber (14) subjected to a grinding process.

17. Apparatus for carrying out the process according to Claim 1, **characterised by** at least two treatment chambers (10, 13, 14) which are closeable relative to each other, the atmosphere and relative to downstream units (17, 18) by vacuum valves (11, 12, 15, 16 and connected to suction pipes (10a, 13a, 14a) by condensers.

18. Apparatus according to Claim 17, **characterised in that** the treatment chambers (10, 13, 14) are arranged at different heights.

19. Apparatus according to Claim 18, **characterised in that** the treatment chambers (10, 13, 14) are arranged in series and interconnected by gravity shafts in which vacuum valves (11, 12) are arranged.

20. Apparatus according to Claim 17, **characterised in that** downstream of the last treatment chamber (14) is connected a combustion oven (19) and a flue chimney (21).

21. Apparatus according to Claim 17, **characterised in that** the outlet of at least one of the vacuum pumps (10c, 13c, 14c) is connected to a high-temperature unit (combustion furnace 18, combustion zone 24).

22. Apparatus according to Claim 17, **characterised in that** the fluid outlet of at least one of the condensers (10b, 13b, 14b) is connected to a high-temperature unit (combustion furnace 18, combustion zone 24).

23. Apparatus according to Claim 17, **characterised in that** in at least one of the treatment chambers (10, 13, 14) is arranged at least one catching device (31, 45) for temporary accommodation and subsequent discharge of the materials under vacuum.

24. Apparatus according to Claim 23, **characterised in that** the at least one catching device (31, 45) is arranged in the operational range of a heating device (34).

25. Apparatus according to Claim 24, **characterised in that** in a series arrangement of a plurality of catching devices (31, 45) the respectively following catching device is arranged in the falling direction of the materials.

26. Apparatus according to Claim 23, **characterised in that** the at least one catching device (31) is designed as a cell wheel and connected to a rotary drive.

27. Apparatus according to Claim 26, **characterised in that** the horizontal rotary axes (A1, A2, A3) of the cell wheels are arranged in a plane (E) which extends at an acute angle to a vertical.

28. Apparatus according to Claim 27, **characterised in that** the acute angle of the plane (E) is chosen so that the rotary axes (A1, A2, A3) of the cell wheels are arranged offset approximately by the respective radius of the cell wheels.

29. Apparatus according to Claim 27, **characterised in that** the plane (E) is rotatable with the rotary axes (A1, A2, A3) of the cell wheels around a centre axis in such a manner that the respective lowermost cell wheel is pivotal by a further rotary drive into a maximum height position in such a manner that the materials are again transportable from top to bottom through a respective treatment chamber (10, 13, 14).

30. Apparatus according to Claim 23, **characterised in that** the at least one collecting container (45) is designed as an open trough which is suspended so as to be pivotal around its rotary axis (A4) positioned in its vertical symmetry plane and connected to a rotary drive.

31. Apparatus according to Claim 30, **characterised in that** the trough has a part-cylindrical casing wall (46).

32. Apparatus according to Claim 30, **characterised in that** the horizontal rotary axes (A4) of a plurality of troughs are arranged in a vertical plane.

33. Apparatus according to Claim 32, **characterised in that** the rotary axes (A4) are provided with separatedly controllable rotary drives.

34. Apparatus according to Claim 17, **characterised in that** at least a part of the treatment chambers (10, 13, 14) form a vertical tower which is surrounded by a continuous heat insulation (49).

35. Apparatus according to Claim 17, **characterised in that** downstream of the last treatment chamber (14) is a cooling chamber (38).

## Revendications

1. Procédé pour le traitement thermique de matériaux contenant de proportions de substances vaporisables, sous dépression et sans amenée d'oxygène et sous des pressions décroissantes et à des températures croissantes, en formant des gaz, des vapeurs, des condensats et des matières solides, dans le but du recyclage et/ou de l'évacuation, caractérisé en ce que l'on introduit les matériaux successivement dans au moins deux chambres de traitement (10, 13, 14) isolées l'une par rapport à l'autre pendant le traitement et reliées l'une à l'autre dans le but du transport des matériaux, de sorte que dans les chambres de traitement (10, 13, 14) respectives qui se succèdent la pression est plus faible et la température est plus élevée que dans la chambre de traitement précédente, et en ce que l'on extrait les substances vaporisables séparément hors de chaque chambre de traitement (10, 13, 14) et qu'on les condense et on les collecte au moins en partie, et que l'on extrait les substances solides hors de la dernière chambre de traitement (14).

2. Procédé selon la revendication 1, caractérisé en ce que l'on amène les vapeurs non condensables à une combustion à haute température à au moins 800°C, de préférence à au moins 1000°C.

3. Procédé selon la revendication 2, caractérisé en ce que l'on amène les vapeurs non condensables à une combustion à haute température dans une cheminée à gaz d'échappement (21).

4. Procédé selon la revendication 1, caractérisé en ce que l'on amène les matières solides extraites hors de la dernière chambre de traitement (14) au recyclage.

5. Procédé selon la revendication 1, caractérisé en ce que l'on amène les matières solides extraites hors de la dernière chambre de traitement (14) directement à une combustion à haute température à au moins 800°C, de préférence à au moins 1000°C.

6. Procédé selon la revendication 1, caractérisé en ce que l'on amène au moins une partie des condensats obtenus depuis les chambres de traitement individuelles (10, 13, 14) à une opération de combustion.

7. Procédé selon la revendication 5, caractérisé en ce que l'on amène les gaz d'échappement provenant de la combustion des matières solides à haute température à une postcombustion dans la cheminée à gaz d'échappement (21).

8. Procédé selon la revendication 1, caractérisé en ce que l'on transforme les matériaux dans un état cokéfié au plus tard dans la dernière chambre de traitement (14).

9. Procédé selon la revendication 1, caractérisé en ce que l'on transporte les matériaux en chute libre depuis une chambre de traitement (10, 13, 14) à l'autre.

10. Procédé selon la revendication 1, caractérisé en ce que l'on collecte les matériaux temporairement dans au moins un dispositif de collecte (31, 45) pour prolonger la durée de séjour dans l'une au moins des chambres de traitement (10, 13, 14).

11. Procédé selon la revendication 1, caractérisé en ce que, pour un traitement des matériaux sous vide dans deux chambres de traitement, l'on choisit une pression entre 900 et 200 mbar et une température entre 60°C et 350°C dans la première chambre de traitement, et une pression entre 400 et 10⁻² mbar et une température entre 300°C et 600°C dans la seconde chambre de traitement.

12. Procédé selon la revendication 1, caractérisé en ce que, pour un traitement des matériaux sous vide dans trois chambres de traitement (10, 13, 14), l'on choisit une pression entre 900 et 200 mbar et une température entre 60°C et 300°C dans la première chambre de traitement (10), une pression entre 500 et 10 mbar et une température entre 250°C et 350°C dans la seconde chambre de traitement (13), et une pression entre 20 et 10⁻² mbar et une température entre 300°C et 600°C dans la troisième chambre de traitement (14).

13. Procédé selon la revendication 1, caractérisé en ce que pendant le traitement, on malaxe les matériaux dans l'une au moins des chambres de traitement (10, 13, 14).

14. Procédé selon la revendication 1, caractérisé en ce qu'avant l'introduction dans la première chambre de traitement (10), on expose les matériaux à une opération de fragmentation.

15. Procédé selon la revendication 1, caractérisé en ce qu'avant l'introduction dans la première chambre de traitement (10), on expose les matériaux à une opération de séchage.

16. Procédé selon la revendication 1, caractérisé en ce qu'après la sortie hors de la dernière chambre de traitement (14), on expose les matières solides formées à une opération de broyage.

17. Dispositif pour mettre en oeuvre un procédé selon la revendication 1, caractérisé par au moins deux chambres de traitement (10, 13, 14) qui sont susceptibles d'être isolées l'une par rapport à l'autre, par rapport à l'atmosphère et par rapport à des unités agencées en aval (17, 18) au moyen de soupapes à vide (11, 12, 15, 16), et en ce qu'elles sont raccordées à des conduites d'aspiration (10a, 13a, 14a) comportant des condensateurs.

18. Dispositif selon la revendication 17, caractérisé en ce que les chambres de traitement (10, 13, 14) sont agencées à différentes hauteurs.

19. Dispositif selon la revendication 18, caractérisé en ce que les chambres de traitement (10, 13, 14) sont agencées les unes derrière les autres et reliées les unes aux autres par des puits de chute dans lesquels sont agencées les soupapes à vide (11, 12).

20. Dispositif selon la revendication 17, caractérisé en ce qu'un four de combustion (19) et une cheminée à gaz d'échappement (21) sont agencés en aval de la dernière chambre de traitement (14).

21. Dispositif selon la revendication 17, caractérisé en ce que la sortie de l'une au moins des pompes à vide (10c, 13c, 14c) est branchée à une unité à haute température (four de combustion 18, zone de combustion 24).

22. Dispositif selon la revendication 17, caractérisé en ce que la sortie de liquide de l'un au moins des condensateurs (10b, 13b, 14b) est branchée à une unité à haute température (four de combustion 18, zone de combustion 24).

23. Dispositif selon la revendication 17, caractérisé en ce qu'il est prévu dans l'une au moins des chambres de traitement (10, 13, 14) au moins un dispositif de collecte (31, 45) pour la réception temporaire et la distribution successive des matériaux sous vide.

24. Dispositif selon la revendication 23, caractérisé en ce que ledit au moins un dispositif de collecte (31, 45) est agencé dans la région d'action d'un dispositif de chauffage (34).

25. Dispositif selon la revendication 24, caractérisé en ce que lors d'un agencement en série de plusieurs dispositifs de collecte (31, 45), le dispositif de collecte respectivement suivant est agencé en direction de chute des matériaux.

26. Dispositif selon la revendication 23, caractérisé en ce que ledit au moins un dispositif de collecte (31) est réalisé sous forme d'une roue à godets et est relié à un entraînement en rotation.

27. Dispositif selon la revendication 26, caractérisé en ce que les axes de rotation horizontaux (A1, A2, A3) des roues à godets sont agencés dans un plan (E) qui s'étend sous un angle aigu par rapport à une verticale.

28. Dispositif selon la revendication 27, caractérisé en ce que l'angle aigu du plan (E) est choisi de telle sorte que les axes de rotation (A1, A2, A3) des roues à godets sont agencés chacun en décalage approximativement du rayon des roues à godets.

29. Dispositif selon la revendication 27, caractérisé en ce que le plan (E) avec les axes de rotation (A1, A2, A3) des roues à godets est en rotation autour d'un axe médian, de telle sorte que la roue à godets respectivement inférieure peut être basculée par un autre entraînement en rotation jusque dans une position supérieure, de telle sorte que les matériaux peuvent être transportés à nouveau depuis le haut vers le bas à travers la chambre de traitement respective (10, 13, 14).

30. Dispositif selon la revendication 23, caractérisé en ce que ledit au moins un récipient de collecte (45) est réalisé sous forme d'une auge ouverte vers le haut qui est suspendue en basculement autour d'un axe de rotation (A4) situé dans son plan de symétrie vertical et qui est reliée à un entraînement en rotation.

31. Dispositif selon la revendication 30, caractérisé en ce que l'auge possède une paroi enveloppe partiellement cylindrique (46).

32. Dispositif selon la revendication 30, caractérisé en ce que les axes de rotation horizontaux (A4) de plusieurs auges sont agencés dans un plan vertical.

33. Dispositif selon la revendication 32, caractérisé en ce que les axes de rotation (A4) sont pourvus d'entraînements en rotation susceptibles d'être commandés séparément.

34. Dispositif selon la revendication 17, caractérisé en ce qu'au moins une partie des chambres de traitement (10, 13, 14) forment une tour verticale qui est entourée par une isolation thermique continue (49).

35. Dispositif selon la revendication 17, caractérisé en ce qu'une chambre de refroidissement (38) pour les matières solides est agencée en aval de la dernière chambre de traitement (14).
